# FASCICULE DE BREVET EUROPEEN

(11) **EP 2 912 236 B1**
(45) Date de publication et mention de la délivrance du brevet: **20.09.2017**
(21) Numéro de dépôt: 13758926.3
(22) Date de dépôt: 31.07.2013
(51) Int. Cl.: E04B 2/26, E04C 1/41, B28B 11/04, C04B 16/06

(54) **BRIQUE DE CONSTRUCTION INTÉGRANT UNE COUCHE ISOLANTE INTERNE**
MAUERSTEIN MIT EINER INTERNEN ISOLIERSCHICHT
BUILDING BRICK INCORPORATING AN INTERNAL INSULATING LAYER

(30) Priorité: 21.09.2012 FR 1258892
(43) Date de publication de la demande: 02.09.2015
(73) Titulaire: Solumix, 87410 Le Palais-Sur-Vienne (FR)
(72) Inventeur: DEL-GALLO, Pascal, F-91410 Dourdan (FR); RICHET, Nicolas, F-78330 Fontenay- Le- Fleury (FR); GOUDALLE, Sébastien, F-89100 Sens (FR)
(74) Mandataire: Cabinet Chaillot
(86) Numéro de dépôt international: PCT/FR2013/051848
(87) Numéro de publication internationale: WO 2014/044937

(56) Documents cités:
- EP-A1- 0 086 974
- DE-U1-202009 002 579

## Description

La présente invention a pour objet une brique de construction intégrant une couche isolante interne.

Les briques en terre cuite, dites « monomur », ou en ciment, dites « parpaing », à structure alvéolaire, sont largement utilisées pour la construction de murs, de sols, de cloisons ou autres éléments de bâtiments.

Ces briques divulguent par exemple dans EP0086974A1 et DE202009002579 U1, sont habituellement composées d'alvéoles vides (non remplies) plus ou moins grandes, de formes plus ou moins différentes, destinées à augmenter l'isolation thermique. Ces structures sont composées d'alvéoles de taille réduite pour limiter la convection thermique et présentent de faibles épaisseurs de parois pour limiter l'effet de conduction.

La finition intérieure de ces murs est réalisée par l'ajout d'une plaque de type BA13, de plâtre ou de plusieurs couches de matériaux.

La construction du mur est donc réalisée en deux étapes, la première est la construction du mur de briques en lui-même et la seconde l'installation de la couche de finition ou de l'isolant intérieur.

Dès lors, un problème qui se pose est de fournir une solution qui permette de réaliser un mur et l'isolation interne ou la couche de finition en une seule étape.

Une solution de la présente invention est une brique de construction de forme générale parallélépipédique comprenant :
- au moins une structure alvéolaire (1) comprenant dans ses alvéoles une matière isolante (2),
- deux faces primaires (3) sur lesquelles débouchent les alvéoles de la structure alvéolaire, et
- quatre faces secondaires (4), caractérisée en ce que ladite structure alvéolaire (1) est en terre cuite, la matière isolante (2) est une matière poreuse silico-calcaire, et au moins une face secondaire (4) est couverte par une couche (5) de ladite matière poreuse silico-calcaire (2), cette dernière comprenant 25% massique à 75% massique de silice, de 75% massique à 25% massique d'hydroxyde de calcium, et de 0 à 5% massique de magnésie et présentant une microstructure composée de nodules et/ou de cristaux sous forme d'aiguilles de manière à ménager des pores de diamètre moyen D50 compris entre 0,1 et 10 pm, et de manière à ce que ladite matière poreuse (2) présente une porosité comprise entre 60 et 95%.

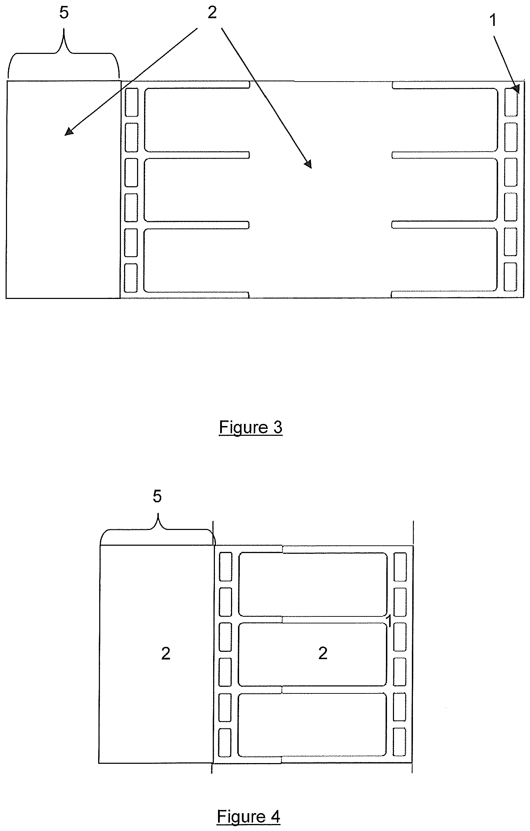

Les figures 1 à 4 représentent une brique de construction selon l'invention. 4 types de structures alvéolaires sont représentés.

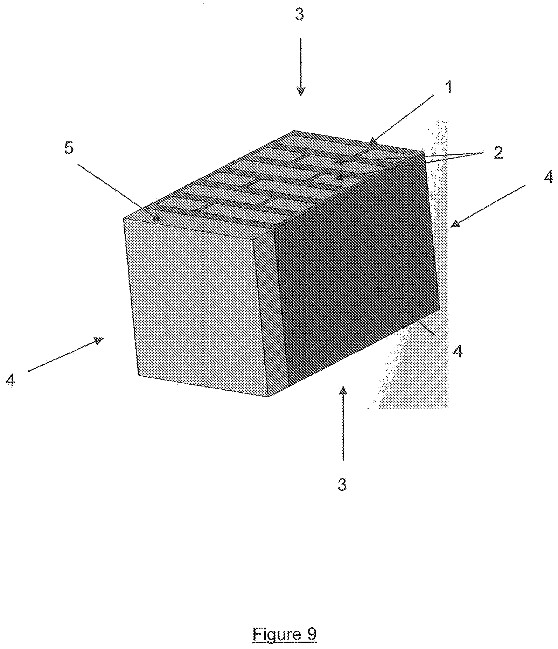

La figure 9 représente une vue 3D d'une brique de construction selon l'invention.

Cette brique de construction présente deux avantages, le premier est d'assurer une très bonne isolation thermique et la seconde de permettre l'élaboration en une seule étape d'un mur et de sa cloison de finition. En effet, en supposant la construction d'un mur avec les briques de construction selon l'invention, la cloison de finition sera constituée par la juxtaposition des différentes couches de matière poreuse silico-calcaire appartenant aux différentes briques du mur de construction.

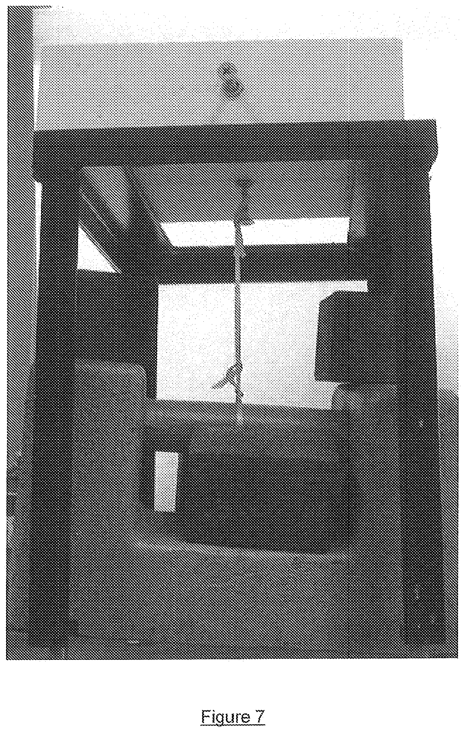

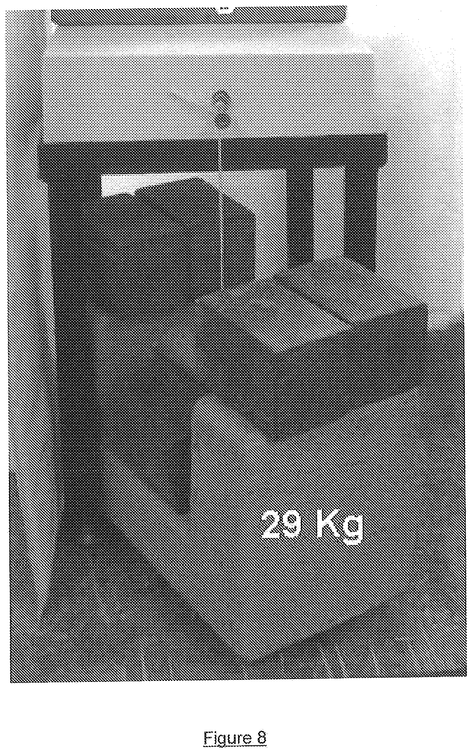

La matière poreuse silico-calcaire utilisée comme matériau d'isolation présente l'avantage d'avoir une très bonne usinabilité pour la réalisation de saignée pour les installations électriques ou la plomberie par exemple ainsi qu'une très bonne résistance mécanique en flexion et à l'arrachement pour la fixation par vissage par exemple (figures 7 et 8).

Selon le cas, la brique de construction peut présenter une ou plusieurs des caractéristiques suivantes :
- la matière poreuse comprend 25% massique à 75% massique de silice, de 75% massique à 25% massique d'hydroxyde de calcium, et de 0 à 5% massique de magnésie et présentant une microstructure composée de nodules et/ou de cristaux sous forme d'aiguilles de manière à ménager des pores de diamètre moyen D50 compris ente 0,1 et 10 µm, et de manière à ce que ladite matière poreuse présente une porosité comprise entre 60 et 95% ;
- la matière poreuse présente une microstructure composée de nodules et/ou de cristaux sous forme d'aiguilles et éventuellement de grains élémentaires de manière à ménager des pores de diamètre moyen D50 compris entre 0,1 et 1µm ;
- la matière poreuse présente une résistance mécanique comprise entre 5 et 40kg/cm² préférentiellement entre 10 et 30kg/cm² et une conductivité thermique comprise entre 50 et 150mW/°K.m préférentiellement inférieure à 100mW/°K.m ;
- la matière poreuse comprend au moins 70% en poids de phase(s) cristalline(s) ; de préférence la phase cristalline renferme une ou plusieurs phases silico-calcaire représentant 0 à 50% du poids de la matière poreuse ; les phases silico-calcaires sont choisis parmi la xonotlite, la foshagite, la tobermorite 11A, la tobermorite 9A, la Riversideite 9Å, la Trabzonite [Ca₄Si₃O₁₀, 2H₂O], la Rosenhahnite [Ca₃Si₃O₈(OH)₂], la Kilalaite [Ca₆Si₄O₁₄, H₂O] et la Gyrolite. De manière générale on peut utiliser toutes les phases du type Ca_{X}SiyO_{Z}(OH)ᵢ., ⱼH₂O avec 1≤ x ≤ 10 ; 1 ≤ y ≤10 ;1≤ z ≤ 30 ; 0.≤ i ≤ 2, 0 ≤ j ≤ 50 ;
- la couche de matière poreuse présente une épaisseur comprise entre 1cm et 50 cm.

Notons que la matière poreuse peut contenir des fibres carbone et/ou de verre et/ ou de cellulose ou toutes autres charges fibreuses.

Notons que la phase cristalline peut renfermer en outre :
- une ou plusieurs phases du type Mg_{w}Si_{y}O_{z}(OH)ᵢ., ⱼH₂O représentant au total de 0 à 50% du poids total de la matière poreuse;
- une ou plusieurs phases du type Mg_{w}CaₓO_{z}(OH)ᵢ., ⱼH₂O représentant au total de 0 à 50% du poids total de la matière poreuse;
- une ou plusieurs phases du type Mg_{w}CaₓSiyO_{z}(OH)ᵢ., ⱼH₂O représentant au total de 0 à 50% du poids total de la matière poreuse.

Préférentiellement, la matière poreuse présente une porosité comprise entre 70 et 90%.

La microstructure de la matière poreuse silico-calcaire est composée de nodules plus ou moins sphériques et reliés entre eux par des cristaux présentant la forme d'aiguilles, résultat d'une croissance cristallographique s'opérant au cours d'une synthèse hydrothermale. Il est à noter également la présence potentielle de grains de matières premières non réagies ou en cours de réactions chimiques.

Notons que c'est cette microstructure qui permet de quasiment supprimer tout effet de convection de l'air.

La porosité totale de la matière poreuse peut être mesurée à l'aide d'un porosimètre à mercure.

La conductivité thermique peut être mesurée à l'aide d'un appareillage de type Plaque Chaude Gardée à une température moyenne comprise entre 0 et 70°C.

La résistance mécanique à la compression peut être mesurée par l'élaboration d'un cube de 100 x 100 mm² de matière poreuse et application sur la face supérieure de celui-ci d'une force en pression tandis qu'elle est maintenue contre une plaque métallique horizontale. Cette force correspond à la pression (en kg/cm² ou MPa) à partir de laquelle la matière commence à se fissurer.

La matière poreuse silico-calcaire utilisée dans le cadre de l'invention permet de réduire la transmission des ondes sonores à travers la brique de construction. La transmission sonore est en générale réduite lors du passage entre deux matériaux de densité différente.

L'isolant inorganique utilisé présente une excellente résistance au feu, sans émission de produits dangereux.

L'ensemble des matières premières utilisées dans l'élaboration de cette brique de construction sont naturelles et recyclables (argile, silice, chaux, magnésie).

La présente invention a également pour objet un procédé de fabrication d'une brique de construction selon l'invention, comprenant les étapes successives suivantes :
- une étape a) de neutralisation de la porosité ouverte de la structure alvéolaire d'une brique de construction alvéolée en terre cuite ou en ciment;
- une étape b) d'insertion de ladite brique de construction dans un moule amovible 6 ménageant au moins un espace 7 entre une face secondaire et l'enveloppe intérieure du moule;
- une étape c) de préparation d'un mélange comprenant de la silice, de la chaux vive, et de l'eau de telle manière que le rapport massique eau/(CaO + SiO₂) est compris entre 2 et 60 et le rapport massique CaO/SiO₂ est compris entre 0,8 et 1,2 ;
- une étape d) d'étanchéification de la face primaire inférieure de la brique de construction alvéolé associé au moule amovible 6;
- une étape e) de remplissage d'une ou plusieurs alvéoles de la brique de construction et de l'espace ménagé par le moule 6 par ledit mélange préparé à l'étape b) ;
- une étape f) de synthèse hydrothermale de la brique de construction par chauffage à une température comprise entre 80°C et 200°C, et sous une pression de vapeur d'eau saturante comprise entre 1.10⁵ Pa et 25.10⁵ Pa, pendant une durée comprise entre 1 heures et 40 heures, pour obtenir une masse céramique, et
- une étape g) de retrait du moule amovible 6; et
- une étape h) de séchage de la brique de construction à une température comprise entre 100 et 450°C pendant une durée de 1 à 30 heures.

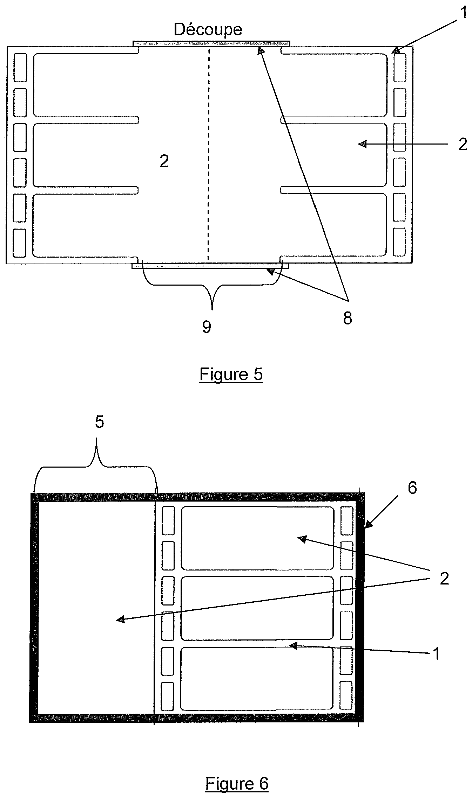

Ce procédé avec moule amovible 6 est illustré par la figure 6.

Dans ce procédé, la brique de construction, par exemple une brique, sert de moule externe pour former la cloison en même temps que le remplissage des alvéoles de la brique. Pour cela, la brique en argile sera placée dans un moule métallique, éventuellement recouvert d'un agent démoulant. Ce moule sera adapté à la forme externe de la brique pour former la cloison à l'endroit approprié (figure 6). Le mélange préparé à l'étape c) est ensuite coulé dans le moule et dans les alvéoles de la brique.

La présente invention a également pour objet un procédé de fabrication alternatif d'une brique de construction selon l'invention, comprenant les étapes successives suivantes :
- une étape a) de neutralisation de la porosité ouverte de la structure alvéolaire de deux briques de construction alvéolées en terre cuite ou ciment ;
- une étape b) de maintien face à face des deux briques de construction à l'aide de tessons amovibles 8 de manière à ménager un espace 9 entre deux faces secondaires des deux briques de construction ;
- une étape c) de préparation d'un mélange comprenant de la silice, de la chaux vive, et de l'eau de telle manière que le rapport massique eau/(CaO + SiO₂) est compris entre 2 et 60 et le rapport massique CaO/SiO₂ est compris entre 0,8 et 1,2 ;
- une étape d) d'étanchéification de la face primaire inférieure de l'assemblage formé par les deux briques de construction à l'étape b);
- une étape e) de remplissage d'une ou plusieurs alvéoles des deux briques de construction et de l'espace 9 ménagé entre les deux faces secondaires des deux briques de construction ;
- une étape f) de synthèse hydrothermale de l'assemblage formé par les deux briques de construction par chauffage à une température comprise entre 80°C et 200°C, et sous une pression de vapeur d'eau saturante comprise entre 1.10⁵ Pa et 25.10⁵ Pa, pendant une durée comprise entre 1 heures et 40 heures, pour obtenir une masse céramique, et
- une étape g) de séchage de l'assemblage issu de l'étape f) à une température comprise entre 100 et 450°C pendant une durée de 1 à 30 heures ;
- une étape h) de retrait des tessons amovibles 8; et
- une étape i) de découpage de l'assemblage de manière à obtenir deux briques de construction comprenant chacune une face couverte par une couche de ladite matière poreuse silico-calcaire.

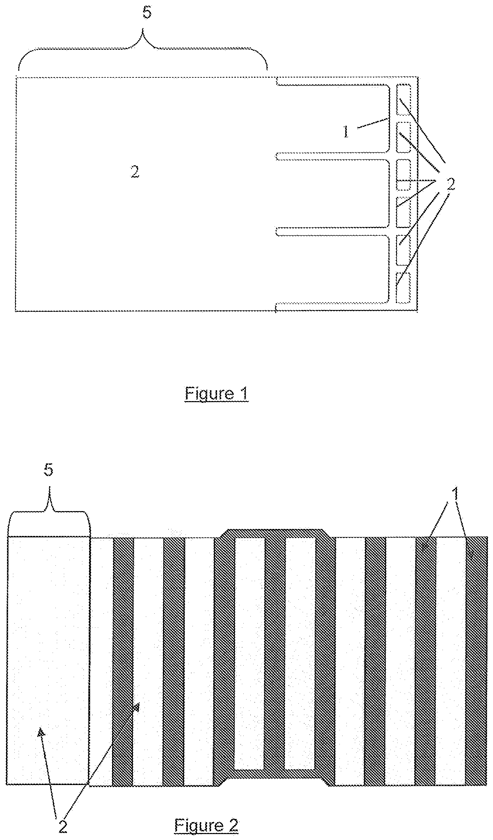

L'utilisation d'un moule représente une contrainte supplémentaire dans le procédé de fabrication de la brique, en termes d'investissement et de manutention. Le procédé de fabrication alternatif apporte une solution à ce problème. La figure 5 montre un exemple de design qui permet de réaliser deux briques en une seule étape. Deux tessons amovibles sont ajoutés pour fermer le « moule » constitué par la brique en elle-même. Le précurseur du matériau d'isolation est coulé dans les cavités de la brique puis le matériau synthétisé. Les tessons amovibles sont éliminés, par exemple à l'aide d'une scie et la brique ouverte en deux selon le pointillé. Deux briques sont ainsi obtenues ayant le design présenté à la figure 1.

Selon le cas, les procédés de fabrication selon l'invention peuvent présenter une ou plusieurs des caractéristiques suivantes :
- à l'étape b) le mélange comprend un agent de germination et est préparé de telle manière que le rapport massique (CaO + SiO₂ + agent de germination)/ H₂O est compris entre 15 et 30% et le rapport massique (CaO + agent de germination)/SiO₂ est compris entre 0,8 et 1,2.
- l'agent de germination est choisi entre la magnésie et la silice colloïdale.
- ledit procédé comprend entre l'étape c) et l'étape e) une étape c1) de stockage du mélange préparé à l'étape b).
- pendant toute la durée de l'étape c1), le mélange est agité.
- ledit procédé comprend une dernière étape d'imperméabilisation des faces primaires 3 et de la face secondaire couverte par la couche 5 de matière poreuse silico-calcaire de la brique de construction, par l'ajout d'un composé organique, d'un silicone ou d'un composé inorganique.

L'étape de neutralisation permet de s'affranchir de l'influence de la porosité de la structure alvéolaire de la brique. Les briques en terre cuite ont une porosité comprise entre 10 et 30%. Cette porosité, si elle n'est pas neutralisée, peut absorber par capillarité l'eau du mélange après remplissage, il en résultera alors une baisse de niveau au sein des canaux d'une brique de la masse poreuse ce qui est une source de défauts. Pour éviter ce phénomène, la brique peut soit préalablement être immergée dans une piscine de manière à la saturer en eau, soit être recouverte à l'intérieur des canaux par un matériau organique (silicone, téflon,...) qui limitera les phénomènes de capillarité, soit un mélange des 2 solutions à savoir protection d'un revêtement étanche ou semi étanche et immersion dans une piscine pour saturer en eau la brique. Le matériau organique peut être un vernis ou tout autre matériau similaire à celui utilisé pour étanchéifier les faces exposées de la brique finale.

L'étape de préparation d'un mélange comprenant de la chaux, de la silice et de l'eau comprend :
- une première sous-étape de synthèse de chaux vive, par calcination à une température supérieure ou égale à 800°C de pavés de calcaire de taille moyenne comprise entre 1 mm et 15 mm ayant une pureté d'au moins 90% en poids et une porosité ouverte supérieure à 0% à inférieure ou égale à 25%, pour obtenir des particules de chaux vive ;
- une deuxième sous-étape de mélange de ladite chaux vive, d'eau et de silice pour obtenir une crème desdits constituants; et éventuellement
- une troisième sous-étape d'introduction d'un agent de germination, tel que de la magnésie par exemple, dans la crème préparée à la deuxième sous-étape.

Notons que cette troisième sous-étape peut être incluse dans la deuxième sous-étape.

L'étape de préparation d'un mélange pourra conduire à des mélanges « tout en un » ou des mélanges « en 2 étapes ». Dans le cas du mélange « tout en un » les matières inorganiques et éventuellement organiques sont pré mélangés à sec. L'ensemble est ensuite introduit dans de l'eau chaude dont la température est comprise entre 30 et 50°C. Dans le cas du mélange « en 2 étapes » la chaux est éteinte dans un premier temps avec une partie de l'eau, puis tous les autres constituants sont rajoutés ensemble avec l'eau complémentaire. Le choix de l'ordre d'introduction sera fixé par l'homme de l'art en fonction des propriétés spécifiques de la chaux (réactivité, viscosité, décantation). Ces propriétés spécifiques sont issues de la matière première (calcaire) et de l'historique de transformation (grillage) de celle-ci.

Il est à noter éventuellement si nécessaire l'ajout de composés organiques (dispersant, liant, anti moussant, ...).

L'étape d'étanchéification de la face inférieure de la brique permet de garnir les canaux de suspension et maintenir le mélange au sein des alvéoles. La brique peut ensuite éventuellement être placée dans un système (wagon, glissière...) en vue de faciliter son enfournement ultérieur dans un autoclave basse pression/basse température dans lequel se déroulera la synthèse hydrothermale. Il est à noter que cette technique est très performante si la brique à remplir a été rectifiée lors de procédé de fabrication. La figure 5 montre un exemple d'un système à base de film plastique permettant d'étanchéifier d'une brique avant remplissage du mélange.

L'étape de remplissage consiste à garnir une ou plusieurs alvéoles d'une brique avec le mélange. De préférence on remplit la rangée d'alvéoles située du côté où est réalisée la couche de matière poreuse afin d'améliorer la tenue au feu d'un mur comprenant une ou plusieurs briques de construction selon l'invention. Un système constitué de pompes et d'une buse d'injection permet le remplissage à la chaîne ou en parallèle de une ou plusieurs briques. Il peut être installé si nécessaire un système vibrant de manière à cisailler la pâte lors du remplissage et permettre ainsi une meilleure homogénéisation du mélange.

L'étape de synthèse hydrothermale consiste à réaliser une synthèse hydrothermale à une température comprise entre environ 80 et 200°C, préférentiellement entre 100 et 160°C, pendant une durée allant, de 2h à 40h, préférentiellement de 5 à 24h. La pression au sein de l'autoclave est la pression de vapeur saturante qui selon les conditions de cuisson peuvent varier entre 10⁵ Pa et 25.10⁵ Pa (1 et 25 bar), préférentiellement entre 1.10⁵ Pa et 10.10⁵ Pa (1 et 10 bar).

L'étape de séchage a pour fonction d'évacuer l'eau résiduelle piégée dans les pores, après la synthèse de la microstructure formée. Cette opération est réalisée dans un four traditionnel électrique ou à gaz (qui peut ou non être le même que celui utilisé pour l'opération de synthèse hydrothermale), le séchage s'opère à la pression atmosphérique. Le cycle de séchage a lieu entre 100 et 450 °C, préférentiellement entre 100°C et 250°C sur une durée comprise entre 1 et 30 heures, préférentiellement entre 2 et 24 heures. Le cycle de séchage peut avoir des rampes et des paliers à des températures intermédiaires. Il sera réalisé de préférence dans une atmosphère saturée en vapeur d'eau pour ralentir le départ de l'eau au début du cycle. En effet, ce départ se traduit par un affaissement de quelques millimètres du matériau poreux, ce qui peut être gênant pour certaines applications.

L'étape d'imperméabilisation consiste à appliquer un agent imperméabilisant (silicone, durcisseur chimique, dépôt sol-gel à base Si, verni à base de cellulose) soit par pulvérisation soit à l'aide de rouleaux sur les faces ou la masse poreuse est apparente de manière à rendre ces dernières hydrophobes. Les briques garnies de matière poreuse peuvent au préalable être rectifiées si nécessaire et/ou poncer en surface.

La présente invention a également pour objet un mur de construction comprenant une ou plusieurs briques de construction selon l'invention, dans lequel toutes les faces secondaires couvertes par la couche de matière poreuse silico-calcaire sont juxtaposées de manière à former une cloison.

En effet, en juxtaposant les différentes faces des briques de construction couvertes par la couche de matière poreuse silico-calcaire, on obtient une cloison de finition. Autrement dit, la brique de construction selon l'invention permet de monter simultanément un mur et sa cloison de finition.

Enfin la présente invention a également pour objet l'utilisation d'une matière poreuse silico-calcaire comme isolant interne d'un mur de construction ; la matière poreuse présentant de préférence les caractéristiques mentionnées précédemment.

## Revendications

1. Brique de construction de forme générale parallélépipédique comprenant :
- au moins une structure alvéolaire (1) comprenant dans ses alvéoles une matière isolante (2),
- deux faces primaires (3) sur lesquelles débouchent les alvéoles de la structure alvéolaire, et
- quatre faces secondaires (4), **caractérisée en ce que** ladite structure alvéolaire (1) est en terre cuite, la matière isolante (2) est une matière poreuse silico-calcaire, et au moins une face secondaire (4) est couverte par une couche (5) de ladite matière poreuse silico-calcaire (2), cette matière poreuse silico-calcaire (2) comprenant 25% massique à 75% massique de silice, de 75% massique à 25% massique d'hydroxyde de calcium, et de 0 à 5% massique de magnésie et présentant une microstructure composée de nodules et/ou de cristaux sous forme d'aiguilles de manière à ménager des pores de diamètre moyen D50 compris entre 0,1 et 10 µm, et de manière à ce que ladite matière poreuse (2) présente une porosité comprise entre 60 et 95%.

2. Brique de construction selon la revendication 1, **caractérisée en ce que** la matière poreuse (2) présente une microstructure composée de nodules et/ou de cristaux sous forme d'aiguilles et éventuellement de grains élémentaires de manière à ménager des pores de diamètre moyen D50 compris entre 0,1 et 1 µm.

3. Brique de construction selon l'une des revendications 1 et 2, **caractérisée en ce que** la matière poreuse (2) présente une résistance mécanique comprise entre 5 et 40 kg/cm² préférentiellement entre 10 et 30 kg/cm² et une conductivité thermique comprise entre 50 et 150 mW/°K.m préférentiellement inférieure à 100 mW/°K.m.

4. Brique de construction selon l'une des revendications 1 à 3, **caractérisée en ce que** la matière poreuse comprend au moins 70% en poids de phase(s) cristalline (s) .

5. Brique de construction selon l'une des revendications 1 à 4, **caractérisée en ce que** la couche (5) de matière poreuse présente une épaisseur comprise entre 1 cm et 50 cm.

6. Procédé de fabrication d'une brique de construction selon l'une des revendications 1 à 5, comprenant les étapes successives suivantes :
- une étape a) de neutralisation de la porosité ouverte de la structure alvéolaire (1) d'une brique de construction alvéolée en terre cuite ;
- une étape b) d'insertion de ladite brique de construction dans un moule amovible (6) ménageant au moins un espace (7) entre une face secondaire et l'enveloppe inférieure du moule ;
- une étape c) de préparation d'un mélange comprenant de la silice, de la chaux vive, et de l'eau de telle manière que le rapport massique eau/ (CaO + SiO₂) est compris entre 2 et 60 et le rapport massique CaO/SiO₂ est compris entre 0,8 et 1,2 ;
- une étape d) d'étanchéification de la face primaire inférieure de la brique de construction alvéolée associée au moule amovible (6) ;
- une étape e) de remplissage d'une ou plusieurs alvéoles de la brique de construction et de l'espace ménagé par le moule (6) par ledit mélange préparé à l'étape b) ;
- une étape f) de synthèse hydrothermale de la brique de construction par chauffage à une température comprise entre 80°C et 200°C, et sous une pression de vapeur d'eau saturante comprise entre 1.10⁵ Pa et 25.10⁵ Pa, pendant une durée comprise entre 1 heure et 40 heures, pour obtenir une masse céramique,
- une étape g) de retrait du moule amovible (6) ; et
- une étape h) de séchage de la brique de construction à une température comprise entre 100 et 450°C pendant une durée de 1 à 30 heures.

7. Procédé de fabrication d'une brique de construction selon l'une des revendications 1 à 5, comprenant les étapes successives suivantes :
- une étape a) de neutralisation de la porosité ouverte de la structure alvéolaire (1) de deux briques de construction alvéolées en terre cuite ;
- une étape b) de maintien face à face des deux briques de construction à l'aide de tessons amovibles (8) de manière à ménager un espace (9) entre deux faces secondaires des deux briques de construction ;
- une étape c) de préparation d'un mélange comprenant de la silice, de la chaux vive, et de l'eau de telle manière que le rapport massique eau/ (CaO + SiO₂) est compris entre 2 et 60 et le rapport massique CaO/SiO₂ est compris entre 0,8 et 1,2 ;
- une étape d) d'étanchéification de la face primaire inférieure de l'assemblage formé par les deux briques de construction à l'étape b) ;
- une étape e) de remplissage d'une ou plusieurs alvéoles des deux briques de construction et de l'espace (9) ménagé entre les deux faces secondaires des deux briques de construction ;
- une étape f) de synthèse hydrothermale de l'assemblage formé par les deux briques de construction par chauffage à une température comprise entre 80°C et 200°C, et sous une pression de vapeur d'eau saturante comprise entre 1.10⁵ Pa et 25.10⁵ Pa, pendant une durée comprise entre 1 heure et 40 heures, pour obtenir une masse céramique, et
- une étape g) de séchage de l'assemblage issu de l'étape f) à une température comprise entre 100 et 450°C pendant une durée de 1 à 30 heures ;
- une étape h) de retrait des tessons amovibles ; et
- une étape i) de découpage de l'assemblage de manière à obtenir deux briques de construction comprenant chacun une face couverte par une couche (5) de ladite matière poreuse silico-calcaire.

8. Procédé de fabrication selon l'une des revendications 6 ou 7, **caractérisé en ce qu'**à l'étape b) le mélange comprend un agent de germination et est préparé de telle manière que le rapport massique (CaO + SiO₂ + agent de germination)/H₂O est compris entre 15 et 30% et le rapport massique (CaO + agent de germination)/SiO₂ est compris entre 0,8 et 1,2.

9. Procédé de fabrication selon la revendication 8, **caractérisé en ce que** l'agent de germination est choisi entre la magnésie et la silice colloïdale.

10. Procédé de fabrication selon l'une des revendications 6 à 9, **caractérisé en ce que** le dit procédé comprend entre l'étape c) et l'étape e) une étape c1) de stockage du mélange préparé à l'étape b).

11. Procédé de fabrication selon la revendication 10, **caractérisé en ce que** pendant toute la durée de l'étape c1), le mélange est agité.

12. Procédé de fabrication selon l'une des revendications 6 à 11, **caractérisé en ce que** ledit procédé comprend une dernière étape d'imperméabilisation des faces primaires (3) et de la face secondaire couverte par la couche (5) de matière poreuse silico-calcaire de la brique de construction, par l'ajout d'un composé organique, d'un silicone ou d'un composé inorganique.

13. Mur de construction comprenant une ou plusieurs briques de construction selon l'une des revendications 1 à 5, dans lequel toutes les faces secondaires couvertes par la couche (5) de matière poreuse silico-calcaire sont juxtaposées de manière à former une cloison.

## Patentansprüche

1. Allgemein quaderförmiger Mauerstein mit:
- mindestens einer alveolaren Struktur (1), die in ihren Poren ein Isoliermaterial (2) umfasst,
- zwei primären Seiten (3), auf die die Alveolen der alveolaren Struktur münden, und
- vier sekundären Seiten (4), **dadurch gekennzeichnet, dass** die alveolare Struktur (1) aus Terrakotta ist, das Isoliermaterial (2) ein poröser Kalksandstein ist und mindestens eine sekundäre Seite (4) von einer Schicht (5) porösen Kalksandsteins (2) abgedeckt wird, wobei dieser poröse Kalksandstein (2) 25% Massenprozent bis 75% Massenprozent Kieselsäure umfasst, 75% Massenprozent bis 25% Massenprozent Kalziumhydroxyd und 0 bis 5% Massenprozent Magnesia, mit einer Mikrostruktur aus Knötchen und/oder Kristallen in Form von Nadeln, um Poren mit einem mittleren Durchmesser von D50 zwischen 0,1 und 10 µm vorzusehen, damit das poröse Material (2) eine Porosität zwischen 60 und 95% aufweist.

2. Mauerstein nach Anspruch 1, **dadurch gekennzeichnet, dass** das poröse Material (2) eine Mikrostruktur aus Knötchen und/oder Kristallen in Form von Nadeln aufweist und eventuell Elementarkörnern, um Poren mit einem mittleren Durchmesser von D50 zwischen 0,1 und 1 µm vorzusehen.

3. Mauerstein nach einem der Ansprüche 1 und 2, **dadurch gekennzeichnet, dass** das poröse Material (2) einen mechanischen Widerstand zwischen 5 und 40 kg/cm², vorzugsweise zwischen 10 und 30 kg/cm², aufweist und eine thermische Leitfähigkeit zwischen 50 und 150 mW/°K.m, vorzugsweise niedriger als 100 mW/°K.m.

4. Mauerstein nach einem der Ansprüche 1 bis 3, **dadurch gekennzeichnet, dass** das poröse Material mindestens 70 Gewichts-% der kristallinen Phase(n) umfasst.

5. Mauerstein nach einem der Ansprüche 1 bis 4, **dadurch gekennzeichnet, dass** die Schicht (5) porösen Materials eine Dicke zwischen 1 cm und 50 cm aufweist.

6. Herstellungsverfahren eines Mauersteins nach einem der Ansprüche 1 bis 5, mit den folgenden aufeinanderfolgenden Phasen:
- eine Phase a) der Neutralisierung der offenen Porosität der alveolaren Struktur (1) eines Porenmauersteins aus Terrakotta;
- eine Phase b) der Einfügung des Mauersteins in eine entfernbare Form (6), die mindestens einen Raum (7) zwischen einer sekundären Seite und der unteren Mantelwand der Form freilässt;
- eine Phase c) der Zubereitung einer Mischung, die Kieselsäure umfasst, gebrannten Kalk und Wasser, so dass das Gewichtsverhältnis Wasser/(CaO + SiO₂) zwischen 2 und 60 liegt und das Gewichtsverhältnis CaO/SiO₂ zwischen 0,8 und 1,2;
- eine Phase d) der Abdichtung der unteren primären Seite des Porenmauersteins, mit der entfernbaren Form (6) verbunden;
- eine Phase e) der Füllung einer oder mehrerer Poren des Mauersteins und des durch die Form (6) erzeugten Raums mit der in Phase b) vorbereiteten Mischung;
- eine Phase f) der hydrothermalen Synthese des Mauersteins durch Erhitzung auf eine Temperatur zwischen 80°C und 200°C, unter einem saturierenden Wasserdampfdruck zwischen 1.10⁵Pa und 25.10⁵Pa, während einer Dauer von 1 bis 40 Stunden, um eine keramische Masse zu erhalten,
- eine Phase g) des Rückzugs der entfernbaren Form (6); und
- eine Phase h) der Trocknung des Mauersteins bei einer Temperatur zwischen 100 und 450°C während einer Dauer von 1 bis 30 Stunden.

7. Herstellungsverfahren eines Mauersteins nach einem der Ansprüche 1 bis 5, mit den folgenden aufeinanderfolgenden Phasen:
- eine Phase a) der Neutralisierung der offenen Porosität der alveolaren Struktur (1) von zwei Poren-Mauersteinen aus Terrakotta;
- eine Phase b) zum Halten der beiden Mauersteine einander gegenüber mit Hilfe von entfernbaren Scherben (8), um einen Raum (9) zwischen zwei sekundären Seiten der beiden Mauersteine vorzusehen;
- eine Phase c) der Zubereitung einer Mischung, die Kieselsäure umfasst, gebrannten Kalk und Wasser, so dass das Gewichtsverhältnis Wasser/(CaO + SiO₂) zwischen 2 und 60 liegt und das Gewichtsverhältnis CaO/SiO₂ zwischen 0,8 und 1,2;
- eine Phase d) der Abdichtung der unteren primären Seite des durch die beiden Mauersteine in Phase b) gebildeten Bauteils;
- eine Phase e) der Füllung einer oder mehrere Poren der beiden Mauersteine und des Raums (9) zwischen den beiden sekundären Seiten der beiden Mauersteine;
- eine Phase f) der hydrothermalen Synthese des durch die beiden Mauersteine gebildeten Bauteils durch Erhitzung auf eine Temperatur zwischen 80°C und 200°C, unter einem saturierenden Wasserdampfdruck zwischen 1.10⁵Pa und 25.10⁵Pa, während einer Dauer von 1 bis 40 Stunden, um eine keramische Masse zu erhalten, und
- eine Phase g) der Trocknung des Bauteils von Phase f) bei einer Temperatur zwischen 100 und 450°C während einer Dauer von 1 bis 30 Stunden;
- eine Phase h) des Rückzugs der entfernbare Scherben; und
- eine Phase i) des Zertrennen des Bauteils, um zwei Mauersteine mit jeweils einer durch eine Schicht (5) von porösem Kalksandstein abgedeckten Seite zu erhalten.

8. Herstellungsverfahren nach einem der Ansprüche 6 oder 7, charakterisiert dadurch, dass in Phase b) die Mischung einen Keimbildner umfasst und derart zubereitet wird, dass das Gewichtsverhältnis (CaO + SiO₂ + Keimbildner)/H₂O zwischen 15 und 30% liegt und das Gewichtsverhältnis (CaO + Keimbildner)/SiO₂ zwischen 0,8 und 1,2.

9. Herstellungsverfahren nach Anspruch 8, **gekennzeichnet dadurch, dass** der Keimbildner unter Magnesia und gallertartiger Kieselsäure ausgewählt wird.

10. Herstellungsverfahren nach einem der Ansprüche 6 bis 9, **gekennzeichnet dadurch, dass** das Verfahren zwischen der Phase c) und der Phase e) eine Phase c1) der Lagerung der in Phase b) zubereiteten Mischung umfasst.

11. Herstellungsverfahren nach Anspruch 10, **gekennzeichnet dadurch, dass** während der gesamten Dauer der Phase c1) die Mischung geschüttelt wird.

12. Herstellungsverfahren nach einem der Ansprüche 6 bis 11, **gekennzeichnet dadurch, dass** das Verfahren eine letzte Phase des Abdichtens der primären Seiten (3) und der durch die Schicht (5) von porösem Kalksandstein abgedeckten sekundären Seite des Mauersteins umfasst, durch die Hinzufügung einer organischer Zusammensetzung, eines Silikons oder einer anorganischen Zusammensetzung.

13. Mauer, die einen oder mehrere Mauersteine nach einem der Ansprüche 1 bis 5 umfasst, wobei alle durch die Schicht (5) von porösem Kalksandstein abgedeckten sekundären Seiten nebeneinander stehen, um eine Trennwand zu bilden.

## Claims

1. A building brick with a generally parallelepipedal shape, comprising:
- at least one cellular structure (1) comprising, into its cells, an insulating material (2),
- two primary faces (3) onto which the cells of the cellular structure come out, and
- four secondary faces (4), **characterized in that** said cellular structure (1) is made of terracotta, the insulating material (2) is a sand-lime porous material, and at least one secondary face (4) is covered with a layer (5) of said sand-lime porous material (2), this sand-lime porous material (2) comprising 25 wt.% to 75 wt.% of silica, 75 wt.% to 25 wt.% of calcium hydroxide, and 0 to 5 wit.% of magnesia and having a microstructure composed of nodules and/or crystals as needles so as to leave pores with an average diameter D50 comprised between 0.1 and 10 µm, and such that said porous material (2) has a porosity between 60 and 95 %.

2. The building brick according to claim 1, **characterized in that** the porous material (2) has a microstructure composed of nodules and/or crystals as needles and optionally elementary grains so as to leave pores with an average diameter D50 between 0.1 and 1 µm.

3. The building brick according to one of claims 1 and 2, **characterized in that** the porous material (2) has a mechanical strength between 5 and 40 kg/cm², preferably between 10 and 30 kg/cm², and a thermal conductivity between 50 and 150 mW/°K.m, preferably lower than 100mW/°K.m.

4. The building brick according to one of claims 1 to 3, **characterized in that** the porous material comprises at least 70 wt.% of crystalline phase(s).

5. The building brick according to one of claims 1 to 4, **characterized in that** the layer (5) of porous material has a thickness comprised between 1 cm and 50 cm.

6. A method for manufacturing a building brick according to one of claims 1 to 5, comprising the following successive steps:
- a step a) for neutralizing the open porosity of the cellular structure (1) of a cellular building brick made of terracotta;
- a step b) for inserting said building brick into a removable mold (6) leaving at least one gap (7) between a secondary face and the lower shell of the mold;
- a step c) for preparing a mixture comprising silica, quicklime and water such that the weight ratio water/(CaO + SiO₂) is comprised between 2 and 60 and the weight ratio CaO/SiO₂ is comprised between 0.8 and 1.2;
- a step d) for sealing the lower primary face of the cellular building brick associated with the removable mold (6);
- a step e) for filling one or more cells of the building brick and the gap arranged by the mold (6) with said mixture prepared in step b);
- a step f) for hydrothermally synthesizing the building brick by heating at a temperature comprised between 80°C and 200°C, and under a water saturation vapour pressure between 1.10⁵ Pa and 25.10⁵ Pa, for a period comprised between 1 hour and 40 hours, for obtaining a ceramic mass,
- a step g) for removing the removable mold (6) ; and
- a step h) for drying the building brick at a temperature comprised between 100 and 450°C for a period between 1 and 30 hours.

7. A method for manufacturing a building brick according to one of claims 1 to 5, comprising the following successive steps:
- a step a) for neutralizing the open porosity of the cellular structure (1) of two cellular building bricks made of terracotta;
- a step b) for holding, face to face, the two building bricks using removable shards (8) so as to leave a gap (9) between two secondary faces of the two building bricks;
- a step c) for preparing a mixture comprising silica, quicklime and water such that the weight ratio water/(CaO + SiO₂) is comprised between 2 and 60 and the weight ratio CaO/SiO₂ is comprised between 0.8 and 1.2;
- a step d) for sealing the lower primary face of the assembly formed by the two building bricks in step b);
- a step e) for filling one or more cells of the two building bricks and the gap (9) left between the two secondary faces of the two building bricks;
- a step f) for hydrothermally synthesizing the assembly formed by the two building bricks by heating at a temperature comprised between 80°C and 200°C, and under a water saturation vapour pressure between 1.10⁵ Pa and 25.10⁵ Pa, for a period between 1 hour and 40 hours, for obtaining a ceramic mass, and
- a step g) for drying the assembly of step f) at a temperature comprised between 100 and 450°C for a period between 1 and 30 hours;
- a step h) for removing the removable shards; and
- a step i) for cutting the assembly so as to obtain two building bricks comprising each a face covered with a layer (5) of said sand-lime porous material.

8. The manufacturing method according to one of claims 6 or 7, **characterized in that**, in step b), the mixture comprises a seeding agent and is prepared such that the weight ratio (CaO + SiO₂ + seeding agent)/H₂O is between 15 and 30% and the weight ratio (CaO + seeding agent)/SiO₂ is between 0.8 and 1.2.

9. The manufacturing method according to claim 8, **characterized in that** the seeding agent is selected among magnesia and colloidal silica.

10. The manufacturing method according to one of claims 6 to 9, **characterized in that** said method comprises, between step c) and step e), a step c1) for storing the mixture prepared in step b).

11. The manufacturing method according to claim 10, **characterized in that**, during the entire step c1), the mixture is stirred.

12. The manufacturing method according to one of claims 6 to 11, **characterized in that** said method comprises a last step for waterproofing the primary faces (3) and the secondary face covered with the layer (5) of sand-lime porous material of the building brick, by adding an organic compound, a silicone or an inorganic compound.

13. A building wall comprising one or more building bricks according to one of claims 1 to 5, in which all secondary faces covered with the layer (5) of sand-lime porous material are adjacent so as to form a partition wall.
